# EUROPEAN PATENT APPLICATION

(11) **EP 1 655 869 A2**
(43) Date of publication of application: **10.05.2006**
(21) Application number: 05004113.6
(22) Date of filing: 25.02.2005
(51) Int. Cl.: H04J 14/02, H04B 10/18

(54) **Optical transmission network designing method employing wavelength multiplexed transmission system**

(30) Priority: 08.11.2004 JP 2004324009
(71) Applicant: FUJITSU LIMITED, Kawasaki-shi, Kanagawa 211-8588 (JP)
(72) Inventor: Hoshida, Takeshi, Fujitsu Limited, Kawasaki-shi, Kanagawa 211-8588 (JP)
(74) Representative: HOFFMANN EITLE

(57) **Abstract**

A method of designing a network is proposed that supports the optimal arrangement of wavelength multiplexed variable dispersion compensators to arrange collectively for all wavelengths to be wavelength multiplexed. The method includes the steps of inputting setting conditions; obtaining arrangement patterns for installing wavelength multiplexed variable dispersion compensators in the optical transmission; if the obtained arrangement patterns are plural, obtaining a total of fixed dispersion values obtained when a fixed dispersion compensator is arranged at a node at which the wavelength multiplexed variable dispersion compensator is positioned, for each of the obtained arrangement patterns; and using sorted arrangement patterns to a sorted arrangement pattern at a predetermined position in the order as targets for detailed designing for obtaining dispersion correction amount for the wavelength multiplexed variable dispersion compensators to be arranged.

## Description

### BACKGROUND OF THE INVENTION

### 1. Field of the Invention

The present invention relates to an optical transmission network designing method employing a wavelength multiplexed transmission system, and to an optical transmission network using the method.

### 2. Description of the Related Art

As an infrastructure in the age of the Internet for utilizing various multi-media services without constraints on time and place, a photonic network technique that can transmit a large volume of information using light at a high speed and a low cost is essential.

Especially, a Wavelength Division Multiplexing (WDM) technique that uses in communication a plurality of optical signals having different wavelengths through one (1) optical fiber by multiplexing the optical signals is rapidly developing. However, in an optical transmission system using the WDM transmission technique, the signal carry-over property is controlled by complicated physical phenomena such as accumulation of noise light accompanied by multi-stage connection in an optical transmission apparatus, wavelength dispersion/polarization mode dispersion/non-linear effect of an optical fiber.

Among the above physical phenomena, the physical phenomenon that influences remarkably on the quality of the optical signal, on a par with the accumulation of optical noise, is the wavelength dispersion based on the difference of the transmission speed that is different for each wavelength. An optical transmission path fiber has a specific wavelength dispersion property. However, distortion is generated in the optical signal waveform when the wavelength dispersion has been accumulated, and errors finally occur in discriminating the signal.

For the purpose of preventing such a disadvantage, compensation of the wavelength dispersion by placing a wavelength dispersion compensator in the optical transmission path fiber is performed. The wavelength dispersion compensator commonly used most often is a Dispersion Compensating Fiber (DCF). A DCF has a wavelength dispersion property having a sign opposite to that of the transmission path fiber.

However, even if the dispersion compensator is used, the waveform distortion may become remarkable and the signal quality may be degraded when the error has become larger in the accumulated dispersion due to a long transmission distance or when the range of the allowable dispersion (dispersion tolerance) on the receiving terminal station side has become narrower due to a strong non-linear effect. Thereby, consequently, a problem is arisen that the designing itself results in failure.

Then, what is thought to be effective is a wavelength multiplexed variable dispersion compensator. As wavelength multiplexed variable dispersion compensators, compensators including those using a fiber Bragg grating, an etalon or a plane optical wave circuit have been proposed. Among others, as such a compensator that is most promising, a VIPA-type wavelength multiplexed variable dispersion compensator employing a Virtually Imaged Phased Array (VIPA) technique has been proposed (see, for example, "Dispersion Compensation Using the Virtually Imaged Phased Array" by M. Shirasaki et al., APCC/OECC'99, pp. 1367-1370).

Using such a wavelength multiplexed variable dispersion compensator, optimizing the arrangement of an optical transmission apparatus can be considered in order tominimize the cost for introducing equipment while providing high reliability in terms of the signal carry-over factor in an optical transmission network. However, much time and much labor are necessary for the designing work in order to optimize the arrangement.

Then, such a designing work is performed taking into account the following tasks.

As the tasks in designing a network:
1) It is necessary to accommodate residual dispersion in all the paths into the dispersion tolerance.
2) Because of the cost of the optical transmission network and a reason concerning the transmission bandwidth property, the number of the wavelength multiplexed variable dispersion compensator is reduced.
   As the tasks of starting up and operating an apparatus:
3) What is the way for in-line setting and controlling of the wavelength multiplexed variable dispersion compensator in a path for wavelength multiplexed transmission?
4) What is the settings of the wavelength multiplexed variable dispersion compensator when an Optical Adding and Dropping Multiplexer (OADM)/Wavelength Cross-Connecting apparatus (WXC) are positioned in-line in the transmission path?
5) What is the setting procedure of the wavelength multiplexed variable dispersion compensator when transmission paths are connected in a ring?

Here, in terms of accommodating the residual dispersion in all the paths into the dispersion tolerance, as a related technique, a method of dispersion compensation in an optical communication system has been proposed (see, for example, Japanese Patent Application Laid-Open Publication No. 2003-318825). According to this method, a target value of the residual dispersion over a span between nodes is set relative to a target value of the residual dispersion between the terminal nodes on the transmitting side and the receiving side such that the ratio of the former target value to the latter target value is same as the ratio of the number of spans in node spans and in spans between node spans to the total number of spans between the terminal nodes on the transmission side and the receiving side.

In addition, a method of compensating wavelength dispersion using a variable dispersion compensator has been proposed (see, for example, Japanese Patent Application Laid-Open Publication No. 2002-57622). This method presented that the method comprises a step of detecting wavelength dispersion relating to at least one of a plurality of optical signals and a variable dispersion compensator that controls the amount of wavelength dispersion slope such that the detected wavelength dispersion is minimized.

However, none of the above patent documents has disclosure of a method of obtaining effectively positions for arranging a variable wavelength dispersing device.

### SUMMARY OF THE INVENTION

It is therefore an object of the present invention to provide a method of designing a network, that supports the optimal arrangement of wavelength multiplexed variable dispersion compensators to arrange collectively for all wavelengths to be wavelength-multiplexed as a measure against the above tasks in network designing.

Furthermore, another object of the present invention is to provide a method of setting a dispersion value at the time of starting up an apparatus that corresponds to the optimal arrangement of the wavelength multiplexed variable dispersion compensators obtained by the method of designing a network, and a preferable arrangement of nodes on the transmission terminal station side and nodes at which the wavelength multiplexed variable dispersion compensators are arranged, used in the above method.

In order to achieve the above objects, according to a first aspect of the present invention there is provided a method of designing an optical transmission network employing a wavelength multiplexed transmission system, the method comprising the steps of inputting setting conditions of the optical transmission network; obtaining arrangement patterns for installing wavelength multiplexed variable dispersion compensators in the optical transmission network based on the setting conditions; if the obtained arrangement patterns for installing wavelength multiplexed variable dispersion compensators are plural, obtaining a total of fixed dispersion values obtained when a fixed dispersion compensator is arranged at a node at which the wavelength multiplexed variable dispersion compensator is positioned, for each of the obtained arrangement patterns; sorting the arrangement patterns in order of priority relative to the magnitude of the absolute value of the obtained total of the fixed dispersion values; and using the sorted arrangement patterns to a sorted arrangement pattern at a predetermined position in the order as targets for detailed designing for obtaining dispersion correction amount for the wavelength multiplexed variable dispersion compensators to be arranged.

If the priority of the arrangement patterns to be sorted are same, dispersion values may be obtained of the distances between arrangements of the wavelength multiplexed variable dispersion compensators to be positioned adjacent, and the sorting is executed in ascending order of the standard deviation values of the distances between the obtained arrangements of the wavelength multiplexed variable dispersion compensator.

The setting conditions of the optical transmission network to be inputted may include network topology showing how many and what type of sites are present on the network connecting between terminal stations and by what type of transmission path fibers spans between sites are connected; transmission properties in the form of wavelength dispersion values of transmission path fibers connecting between sites; and station conditions that are information indicating whether a terminal station or not, whether an optical adding and dropping multiplexer or not, or whether an optical amplifying and relaying apparatus (ILA), etc.

A value may be obtained that minimizes the root mean square (RMS) of a residual dispersion target and an accumulated dispersion value concerning all wavelengths and all paths as a dispersion correction amount in the detailed designing.

If transmission is possible according to the detailed designing, detailed designing processes for arrangement patterns having smaller priority than the corresponding priority of the arrangement patterns may be omitted.

The arrangement patterns for arranging the wavelength multiplexed variable dispersion compensators in the optical transmission network based on the setting conditions may be common to a plurality of wavelength multiplexed, and may be determined by the detailed designing as to whether or not transmission is possible for all of the plurality of wavelengths multiplexed.

The wavelength multiplexed variable dispersion compensators may be disposed at nodes that drops wavelength signals in the transmission paths of the optical transmission network.

Whether or not transmission is possible may be determined under a condition that no wavelength multiplexed variable dispersion compensator is arranged prior to the process for obtaining arrangement patterns for arranging the wavelength multiplexed variable dispersion compensators in the optical transmission network based on the setting conditions, and if the transmission is possible, processes after the process for obtaining the arrangement patterns for arranging the wavelength multiplexed variable dispersion compensator in the optical transmission network may be omitted.

In order to achieve the above objects, according to a second aspect of the present invention there is provided an optical transmission network employing a wavelength multiplexed transmission system by which a transmitting terminal station and a receiving terminal station are connected through a plurality of nodes, wherein for wavelength multiplexed variable dispersion compensators to be arranged at any one of the plurality of nodes, based on setting conditions of the optical transmission network, arrangement patterns for arranging wavelength multiplexed variable dispersion compensators in the optical transmission network is obtained, wherein if the obtained arrangement patterns for arranging the wavelength multiplexed variable dispersion compensators are plural, a total of fixed dispersion values obtained when a fixed dispersion compensator is arranged at a node at which the wavelength multiplexed variable dispersion compensator is placed is obtained for each of the obtained arrangement patterns, wherein dispersion values of the distances between arrangements of the wavelength multiplexed variable dispersion compensators to be positioned adjacent are obtained, wherein the arrangement patterns are sorted in order of priority relative to the magnitude of the absolute value of the obtained total of the fixed dispersion values, and wherein dispersion correction amount obtained in detailed designing targeting the sorted arrangement patterns to a sorted arrangement pattern at a predetermined position in the order.

If the priority of the arrangement patterns to be sorted are same, the sorting may be executed in ascending order of the dispersion values of the distances between the obtained arrangements of the wavelength multiplexed variable dispersion compensator.

The setting conditions of the optical transmission network may include network topology showing how many and what type of sites are present on the network connecting between terminal stations and by what type of transmission path fibers spans between sites are connected; transmission properties in the form of wavelength dispersion values of transmission path fibers connecting between sites; and station conditions that are information indicating whether a terminal station or not, whether an optical adding and dropping multiplexer or not, or whether an optical amplifying and relaying apparatus (ILA), etc.

A value may be obtained that minimizes the root mean square (RMS) of a residual dispersion target and an accumulated dispersion value concerning all wavelengths and all paths as a dispersion correction amount in the detailed designing.

In order to achieve the above objects, according to a third aspect of the present invention there is provided a method of starting up an optical transmission network employing a wavelength multiplexed transmission system by which a transmitting terminal station and a receiving terminal station are connected through a plurality of nodes, the method comprising the steps of sending a dispersion measurement signal having a predetermined frequency from the transmitting terminal station side to nodes at which wavelength multiplexed variable dispersion compensators are arranged among the plurality of nodes; selecting only a bit rate frequency component of the dispersion measurement signal and measuring power of the signal on an output side of the wavelength multiplexed variable dispersion compensators; adjusting dispersion amount of the wavelength multiplexed variable dispersion compensators such that the measured power is minimized; and setting dispersion correction amount obtained using a method according to any one of claims 1 to 7 in the wavelength multiplexed variable dispersion compensators.

In order to achieve the above objects, according to a fourth aspect of the present invention there is provided a wavelength multiplexed transmission system by which a transmitting terminal station and a receiving terminal station are connected through a plurality of nodes, wherein
the transmitting terminal station includes a switch of which one (1) output of two (2) inputs is controlled to be switched; a measurement signal generating circuit for generating an NRZ square wave signal having a predetermined frequency and outputting an alternating signal of "1" and "0" having a cycle with half of the predetermined frequency as a measurement signal; a mode maintaining circuit for maintaining a measurement mode and a normal mode; control being provided such that the measurement signal generating circuit outputs a transmission signal having a same clock rate as that of the measurement signal when the switch has switched to the normal mode and that the measurement signal generating circuit outputs the measurement signal when the switch has switched to the measurement mode, a driving amplifier for inputting the measurement signal outputted from the switch to generate a drive signal; a modulator for optical-intensity-modulating light emitted from a laser by the output of the driving amplifier; and a circuit for sending out an output of the modulator as a measurement signal, wherein a node at which a wavelength multiplexed variable dispersion compensator is arranged among the plurality of nodes includes a control circuit for setting a predetermined dispersion value in advance to the wavelength multiplexed variable dispersion compensators; a filter for receiving a dispersion measurement signal sent from the transmitting terminal station through the wavelength multiplexed variable dispersion compensators and extracting only a bit rate frequency component of the received dispersion measurement signal; and a power monitor for monitoring the spectral intensity at the bit rate frequency of an output of the filter, wherein the control circuit adjusts a dispersion amount of the wavelength multiplexed variable dispersion compensators such that the spectral intensity monitored by the power monitor is minimized.

According to the present invention, the optimal arrangement of the wavelength multiplexed variable dispersion compensators and the setting values of these compensators, with which the signal quality carry-out factors of all of the paths are guaranteed for given topology/traffic demand while the cost of equipment can be minimized can be determined. Thereby, it is easy to perform network designing at a low cost regarding equipment. Furthermore, the apparatus can be started up to an operating state precisely with few steps utilizing the result of the designing.

### BRIEF DESCRIPTION OF THE DRAWINGS

The above and other objects, aspects, features and advantages of the present invention will become more apparent from the following detailed description when taken in conjunction with the accompanying drawings, in which:
Fig. 1 shows an example of an optical network system connecting between a transmission side terminal station and a receiving side terminal station that are the targets of a method of designing an optical transmission network of the present invention;
Fig. 2 is an explanatory view of an optical adding and dropping multiplexer (OADM);
Fig. 3 is an explanatory view of a wavelength cross-connecting apparatus (WXC);
Fig. 4 shows the configuration of a VIPA-type wavelength multiplexed variable dispersion compensator;
Fig. 5 shows an example of a management system that executes a method of designing a network;
Fig. 6 is an explanatory view of a dispersion tolerance database;
Fig. 7 is an explanatory view of a database of fiber dispersion values D(x);
Fig. 8 shows a fixed wavelength dispersion compensator database;
Fig. 9 is a process flow (Part 1) of the method of designing a network according to the present invention;
Fig. 10 is a process flow (Part 2) of the method of designing a network according to the present invention;
Fig. 11 is an extraction details flow (Part 1) of arrangement patterns of the wavelength multiplexed variable dispersion compensators;
Fig. 12 is an extraction details flow (Part 2) of arrangement patterns of the wavelength multiplexed variable dispersion compensators;
Fig. 13 shows a detailed designing process for the case where the number Nvdc of the wavelength multiplexed variable dispersion compensators (VDC) is zero (0);
Fig.14 shows a detailed designing process for the case where the number Nvdc of the wavelength multiplexed variable dispersion compensators (VDC) is one (1) or more;
Fig. 15 shows an example of a table for VDC arrangements created in the process of execution of the method of the present invention;
Fig. 16 shows the necessity of setting condition values obtained for designing, in an actual system;
Fig. 17 shows a sequence indicating the procedure of a method of designing a system according to the present invention;
Fig. 18 is a block diagram of an example of the configuration that realizes a function of a transmitter 230 in the system setting of Fig. 17;
Fig. 19 is a block diagram of an example of the configuration of a zero (0)-dispersion monitor 280 of the wavelength multiplexed variable dispersion compensator (VDC) to be arranged at a position pre-designed between the transmitter 230 and the receiving terminal station (REC TM); and
Fig. 20 shows an example of an output of the RF power monitor.

### DESCRIPTION OF THE PREFERRED EMBODIMENTS

Embodiments of the present invention will now be described with reference to the drawings. It is to be noted that the embodiments shown in the drawings are only to facilitate the understanding of the present invention and that the technical scope of the present invention is not limited by those embodiments.

In general, an optical transmission network comprises apparatuses such as linear relaying apparatuses (1R: Relating) arranged in a station building placed in advance, regenerating relaying apparatuses (3R: Regenerating, Retiming and Reshaping), Optical Adding and Dropping Multiplexers (OADM), and optical transmission path fibers connecting these apparatuses.

The linear relaying apparatus (1R) is an apparatus for amplifying the intensity of a received optical signal in order to compensate the attenuation of the signal caused by the optical transmission fibers. Noises mixed in the main signal of the linear relaying apparatus (1R) are also amplified and accumulated repeatedly by the signal amplification.

Therefore, it is necessary to prevent degradation of the signal to noise ratio of the main signal by equipping the regenerating relaying apparatuses (3R) at a proper frequency and applying signal regenerating in order not to cause the main signal to be unable to be regenerated due to degradation of the signal to noise ratio of the main signal.

The regenerating relaying apparatus (3R) converts a received multiplexed signal into an electric signal for each channel using a regenerator (Regenerating) and clock reproduction and re-identification are executed to the converted electric signal, thereafter, converts again the electric signal into an optical signal and send the optical signal out. In general, a regenerating relaying apparatus (3R) separates a wavelength-multiplexed optical signal for each channel having one (1) wavelength and, thereafter, wavelength-multiplexes for each channel the separated signals again.

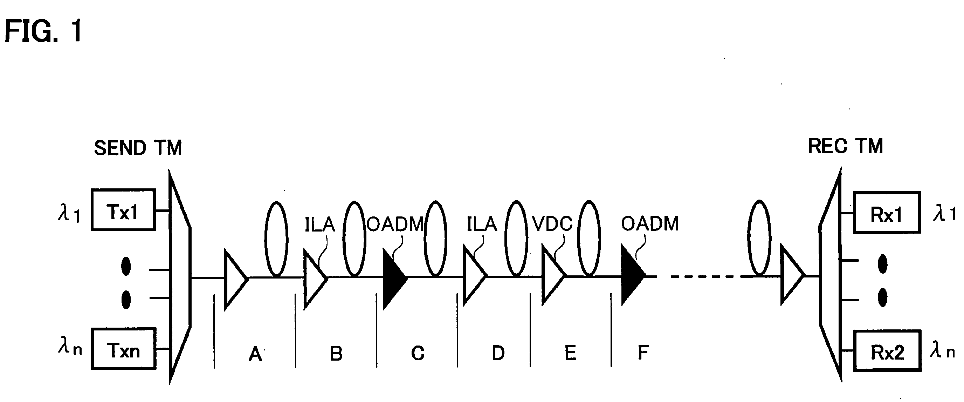

Fig. 1 shows an example of an optical network system connecting between a transmission side terminal station (SEND TM)and a receiving side terminal station (REC TM) that are the targets of a method of designing an optical transmission network of the present invention. The transmitting and receiving side terminal stations are connected by a plurality of optical transmission path spans A, B, C... and optical amplifying relaying apparatuses (ILAs: In Line Amplifiers) and Optical Adding and Dropping Multiplexers (OADMs) are arranged on the way in the network transmitting paths. The optical amplifying relaying apparatus is an apparatus that has a linear relaying apparatus (1R) and a fixed dispersion compensator (DC: Dispersion Compensator).

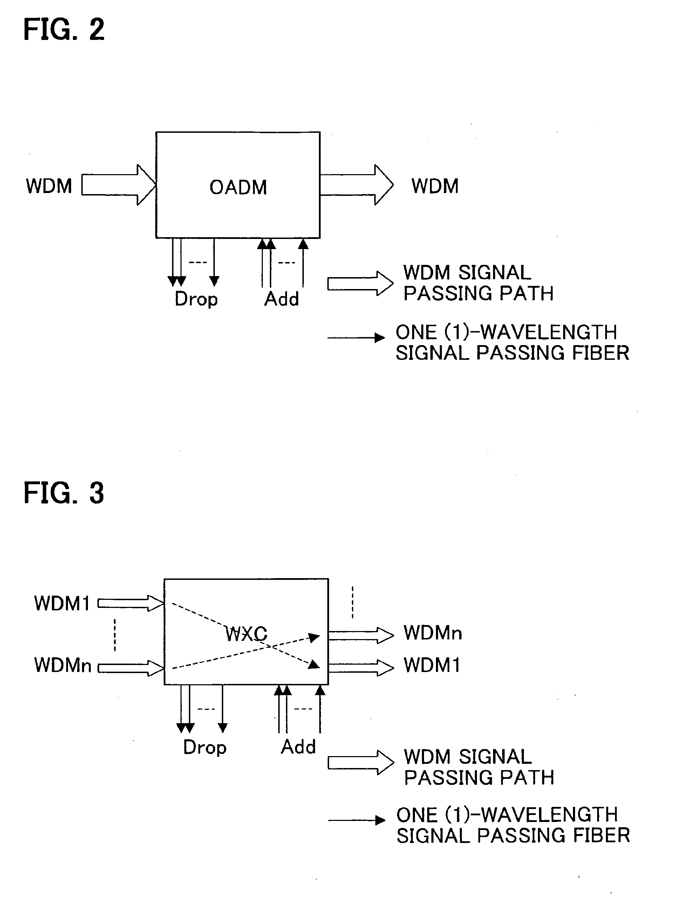

Fig. 2 is an explanatory view of the optical adding and dropping multiplexer (OADM). The optical adding and dropping multiplexer (OADM) separates (Drop) a wavelength channel to be terminated as a client signal from and/or adds (Add) a wavelength channel for which the client side has issued a transmission requested as a part of a wavelength multiplexed optical signal (WDM) to the wavelength multiplexed optical signal.

During this, signal regenerating and regenerated signal amplification (3R) are also performed simultaneously when necessary. In addition, when the number of directional paths of wavelength multiplexed transmission path fiber pairs connected exceeds two (2), optical adding and dropping multiplexer (OADM) is sometimes called "hub (HUB)", "multi-directional-path optical adding and dropping multiplexer" or "wavelength cross-connecting apparatus (WXC)", etc.

However, the network configuration shown in Fig. 1 remains same when it is connected through a wavelength cross-connecting apparatus (WXC). Fig. 3 is an explanatory view of a wavelength cross-connecting apparatus (WXC) and the wavelength cross-connecting apparatus (WXC) is inputted with a plurality of WDM signals (WDM1 to WDMn) and outputs the WDM signals as they are though a predetermined cross-connecting path. Therefore, even in the case where the WDM signals are transmitted through the wavelength cross-connecting apparatus (WXC) , the network can be handled as an optical transmission network connecting between stations one to one, as show in Fig. 1.

The present invention provides a method of effectively obtaining the way a wavelength multiplexed variable dispersion compensator (VDC: Variable Dispersion Compensator) is disposed optimally, that is, what compensation value should be set at which position (site), into such an optical transmission network set in advance, as a method of designing a network.

Here, the mechanism of variation of compensation amount will be described taking an example of the configuration of a VIPA-type wavelength dispersion compensator as a wavelength multiplexed variable dispersion compensator. However, needless to say, application of the present invention is not limited to such a VIPA-type wavelength dispersion compensator.

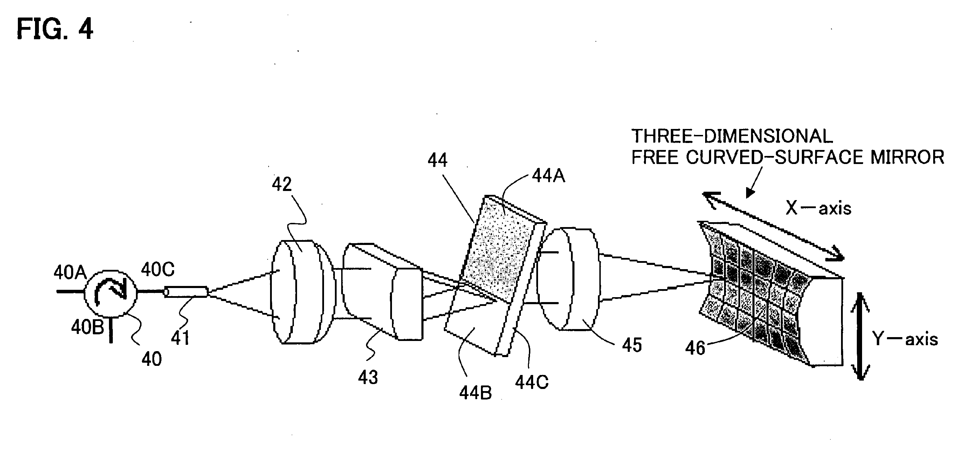

Fig. 4 shows the configuration of a VIPA-type wavelength multiplexed variable dispersion compensator. This configuration is composed by arranging on an optical axis an optical circulator 40, an optical fiber 41, a collimating lens 42, a semi-cylindrical (line focusing lens) 43, a VIPA (Virtually Imaged Phased Array) glass plate 44, a focusing lens 45 and a three-dimensional free curved-surface mirror 46, in order described here.

The optical circulator 40 has ports 40A, 40B and 40C and functions such that a WDM light beam supplied to the port 40A is outputted from the port 40B and a light beam supplied to the port 40B is outputted from the port 40C. Therefore, the ports 40A and 40C can be used respectively as both of an input and an output.

The reflectivity of an upper portion 44A and a lower portion 44B of a surface on the input side and a surface 44C on the output side of the glass plate 44 is respectively set at 100%, 0% and 98%. The beam waist produced by the semi-cylindrical lens 43 is adapted to be positioned approximately at the surface 44C.

Additional details of the VIPA is described by M. Shirasaki et al. in "Dispersion Compensation Using the Virtually Imaged Phased Array", APCC/OECC'99, pp. 1367-1370.

In the configuration of Fig. 4, the amount of wavelength dispersion can be varied by fixing the distance between the focusing lens 45 and the three-dimensional free curved-surface mirror 46 and varying the distance between the focusing lens 45 and the glass plate 44.

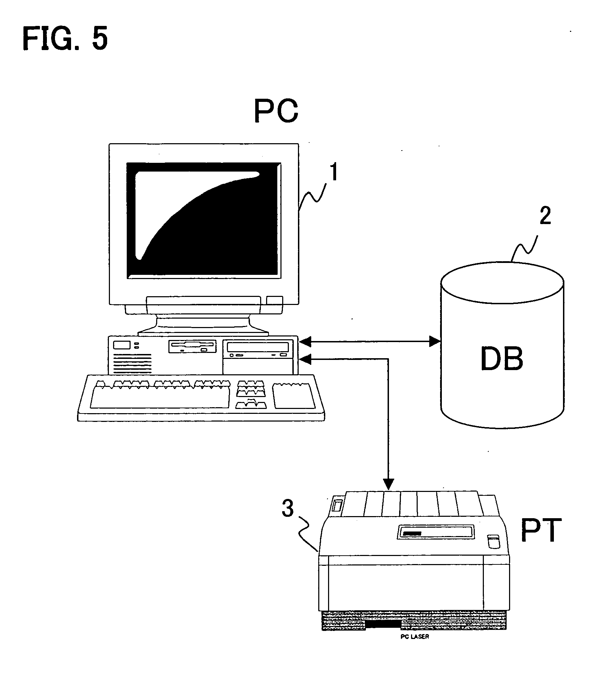

Fig. 5 shows an example of a management system that executes a method of designing a network. Data necessary for executing the method of designing a network of the present invention are stored in a database 2.

The method of designing a network according to the present invention is realized by executing a process following a flow of the embodiment, described as follows with the stored data by a computer 1. The result of the execution of the method of designing a network is displayed on a monitor of the computer 1 and, when necessary, is outputted by a printer 3.

Here, the data stored in the database 2 will be described as follows.

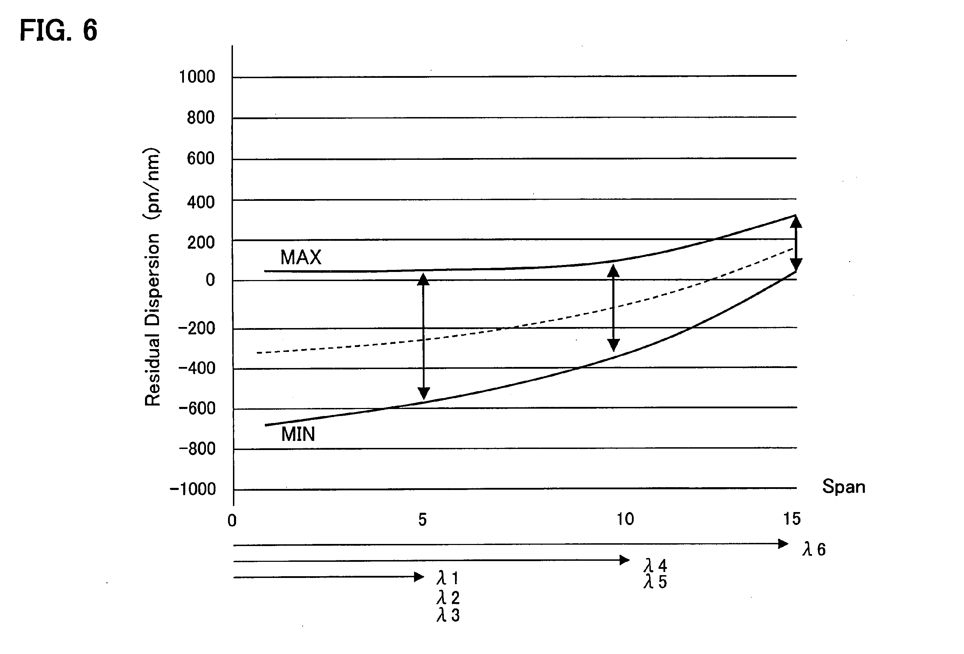

First, a dispersion tolerance database as shown in Fig. 6 will be described. The data are prepared for each of signal bit rate (10Gb/s, 40Gb/s) and for each type of fiber, and are represented for each site by lines connecting upper limit tolerance dispersion values (Max) and lower limit tolerance dispersion values (Min).

In the example shown in Fig. 6, conditions are shown, under which optical signals having wavelengths λ1, λ 2 and λ3 are dropped at a site 5, optical signals having wavelengths λ4 and λ5 are dropped at a site 10 and an optical signal having wavelengths λ6 is dropped at a site 15.

Therefore, it can be understood that, for example, the requirement is that dispersion values for the wavelength λ1, λ2 and λ3 are within the range between the upper limit tolerance dispersion values (Max) and the lower limit tolerance dispersion values (Min) at the site 5.

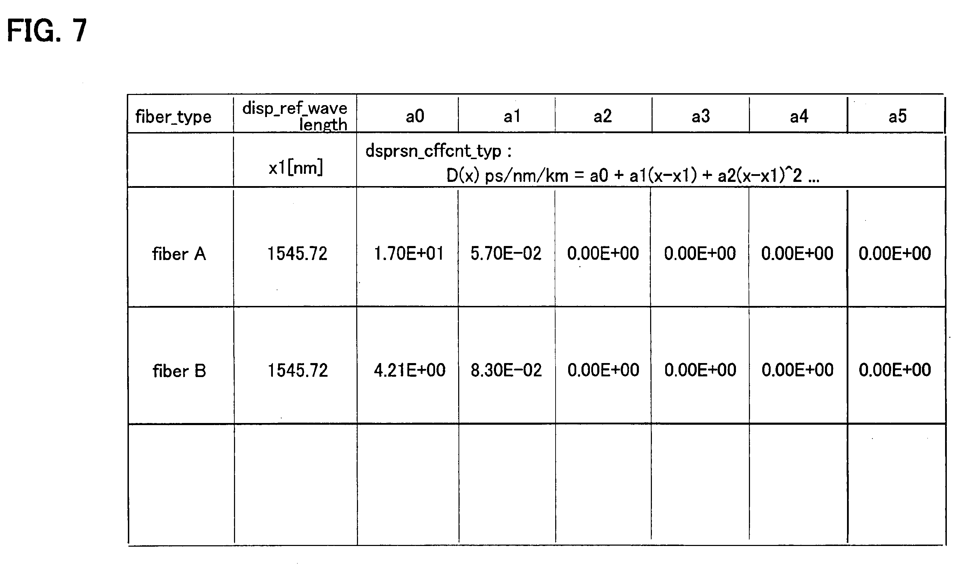

Fig. 7 shows a database of fiber dispersion values D(x). As a transmission path property for each fiber, the wavelength dependency of wavelength dispersion coefficients is represented by a five-order multi-term equation as shown in Fig. 7.

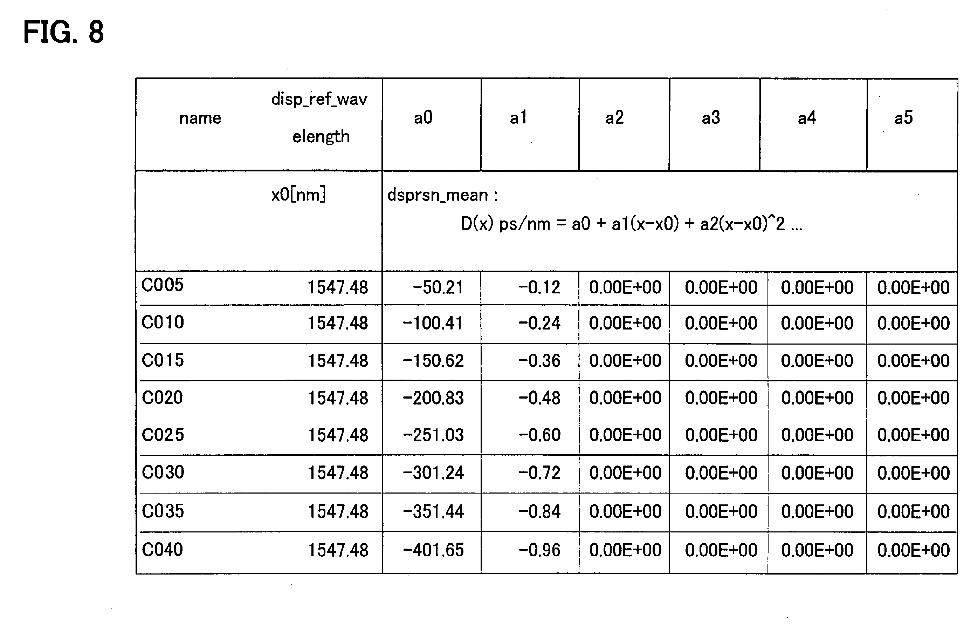

Fig. 8 shows a fixed wavelength dispersion compensator database. The dependency of wavelength dispersion is also represented by a five-order multi-term equation and data of a plurality of fixed wavelength dispersion compensators respectively having different dispersion compensation amount are prepared approximately every 50ps/nm.

Next, based on such types of databases, process procedures of the method of designing networks according to the present invention will be described.

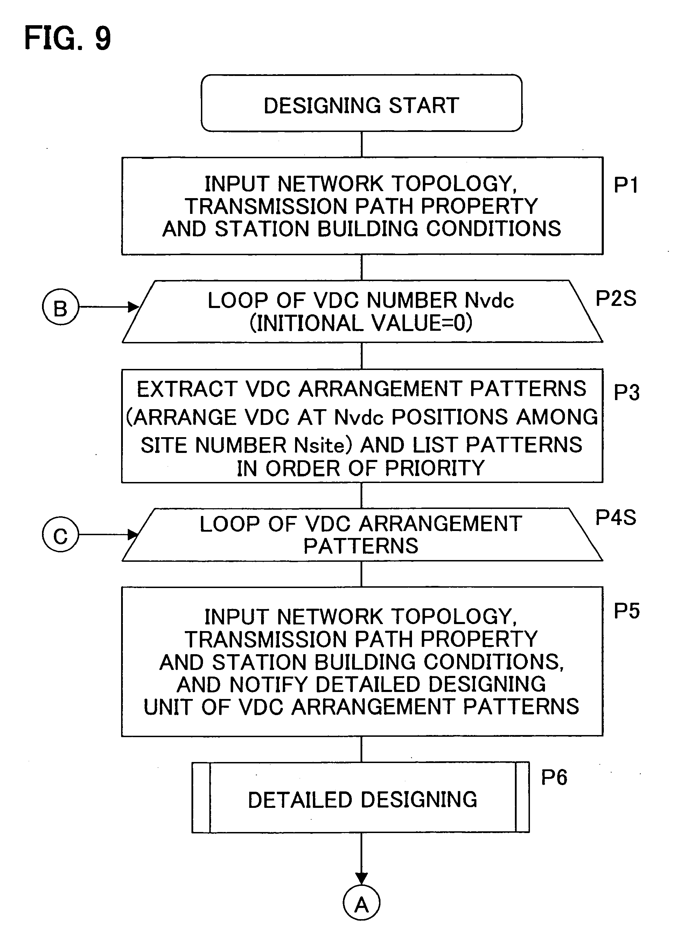

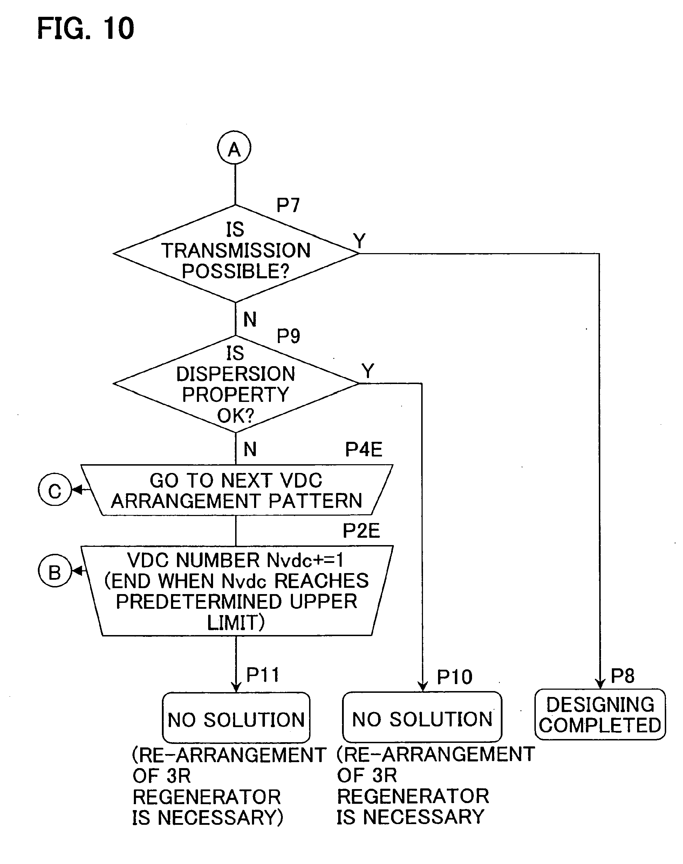

Fig. 9 and Fig. 10 show a process flow (Part 1 and Part 2) of the method of designing a network according to the present invention. When designing has been started, as preconditions, network topology, transmission path property and station building condition are stored in the database 2 by a designer as setting conditions of the optical transmission network (process step P1).

The network topology is information that indicates how many and what type of sites are present on a network connecting between terminal stations and by what type of transmission path fibers spans between sites are connected.

Among the transmission path properties, the property concerning the present invention is wavelength dispersion values of transmission path fibers connecting betweensites. In the case where a fiber has been disposed in advance, the values are measured by visiting the field. Otherwise, because the fiber wavelength dispersion coefficients for each commercial product are registered in the database 2, a wavelength dispersion value is obtained by multiplying a known distance between the sites by a wavelength dispersion coefficient for a unit length. As a result, the dispersion tolerance database already shown in Fig. 6 can be obtained.

The station building condition is information that indicates, for example, whether or not a station building is a terminal station, an OADM or an ILA, etc. For example, in the dispersion tolerance database shown in Fig. 5, the station building condition is information that indicates that the sites 5, 10 and 15 are sites in which OADMs are arranged.

Next, as a process for obtaining the optimal positions to insert wavelength multiplexed variable dispersion compensators (VDC), a predetermined number of arrangement patterns having high priority are repeatedly determined as arrangement patterns obtained every time a wavelength multiplexed variable dispersion compensator (VDC) is added until transmission is possible (repetition of process steps between P2S and P2E).

In this case, as the number of the wavelength multiplexed variable dispersion compensators (VDC) disposed is decreased, it becomes more preferable for a network.

Therefore, the number of the wavelength multiplexed variable dispersion compensators (VDC) is set at zero (=0) as the initial value and evaluating is started (process step P2S).

Process step P3 is an extraction process of arrangement patterns of the wavelength multiplexed variable dispersion compensators. Among the number Nsite of sites, patterns that arrange the wavelength multiplexed variable dispersion compensators (VDC) at Nvdc positions are listed in order of priority (process step P3).

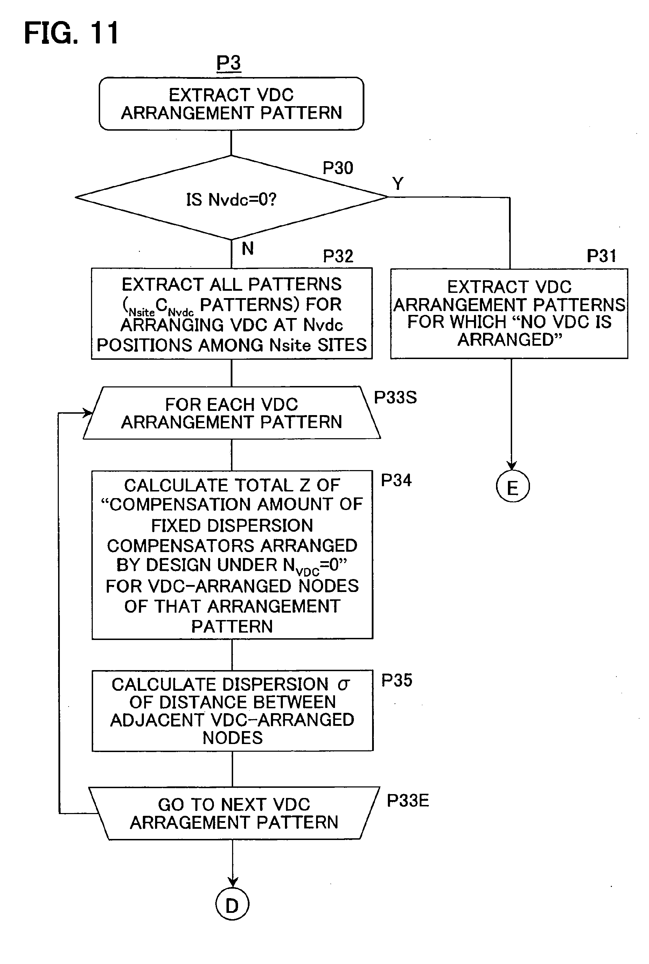

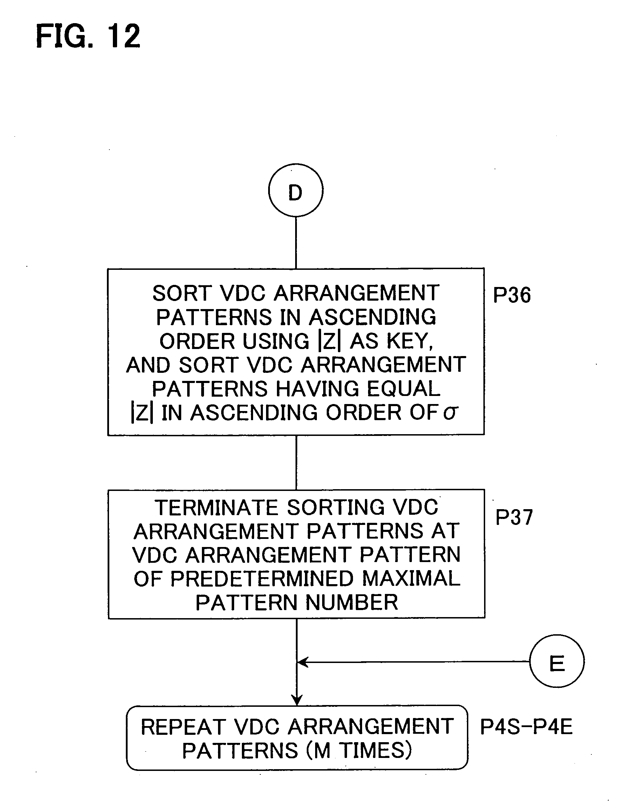

The details of process step P3 are shown in an extraction details flow (Part 1 and Part 2) of arrangement patterns of the wavelength multiplexed variable dispersion compensators of Fig. 11 and Fig. 12.

In Fig. 11, because the initial value is first set at zero (=0) (process step P30, Y), a wavelength multiplexed variable dispersion compensator (VDC) arrangement pattern according to which "no wavelength multiplexed variable dispersion compensator (VDC) is arranged" is extracted (process step P31) and the process is directly advanced to a loop process of the VDC arrangement patterns (repetition of process steps between P4S and P4E).

Returning to Fig. 9, in the loop process of the VDC arrangement patterns, first, the network topology, the transmission path properties, the station building condition stored in advance in the database 2 and VDC arrangement patterns obtained according to the flow shown in Fig. 9 and Fig. 10 are notified to a detailed designing process (process step P6) (process step P5).

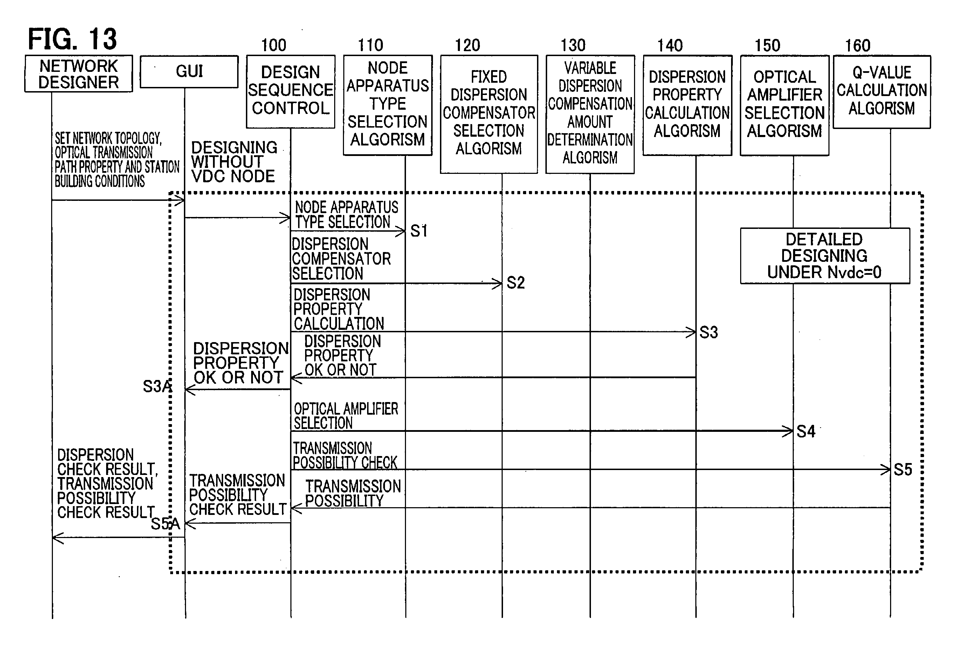

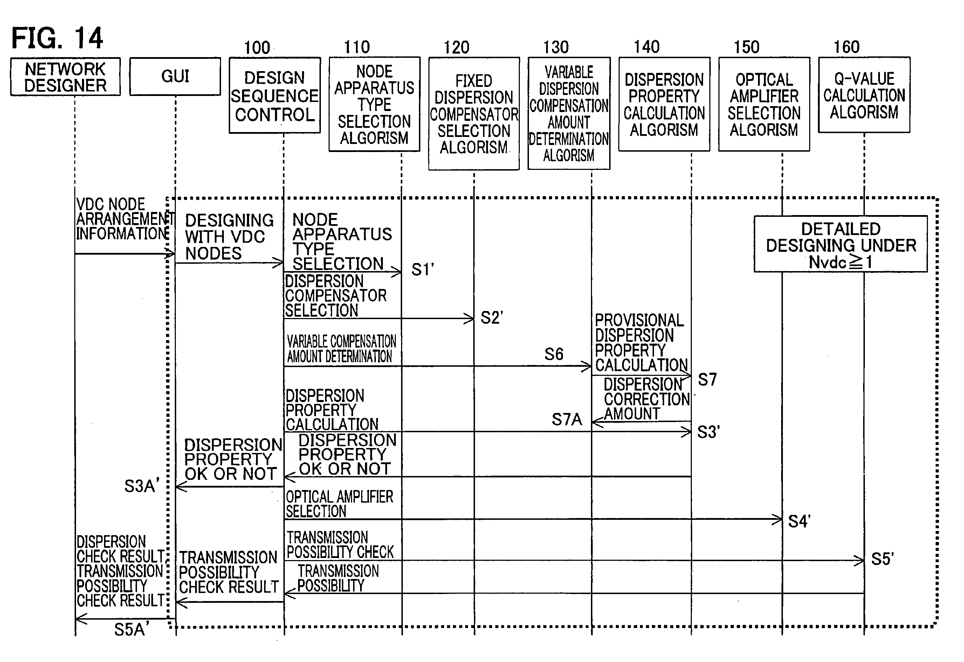

The detailed designing process is as shown in Fig. 13 and Fig. 14. Fig. 13 shows a detailed designing process for the case where the number Nvdc of the wavelength multiplexed variable dispersion compensators (VDC) is "zero (0)" and Fig.14 shows a detailed designing process for the case where the number Nvdc of the wavelength multiplexed variable dispersion compensators (VDC) is "one (1) or more".

When the number is set at zero (Nvdc=0) as the initial value, a process of Fig. 13 is executed.

Here, in Fig. 13, in control for the case where Nvdc=0, a node apparatus type selection algorism 110, a fixed wavelength dispersion compensator selection algorism 120, a wavelength dispersion property algorism 140, an optical amplifier selection algorism 150 and a Q-value calculation algorism 160 are involved according to a designing sequence control 100. In Fig. 14, a variable dispersion compensation amount determination algorism 130 is involved in the case where Nvdc is one (1) or more as a characteristic of the present invention. These algorisms are executed by software or firmware implemented in a management unit.

In Fig. 13, based on the network topology, the optical transmission path property and the station building condition inputted and stored in advance by a network designer, when a condition that no VDC is present is inputted by a GUI, node apparatus type selection is ordered to the node apparatus type selection algorism 110 according to the design sequence control 100 (step S1).

The node apparatus type selection algorism 110 selects devices necessary for each node based on the above network topology, the optical transmission path property and the station building condition.

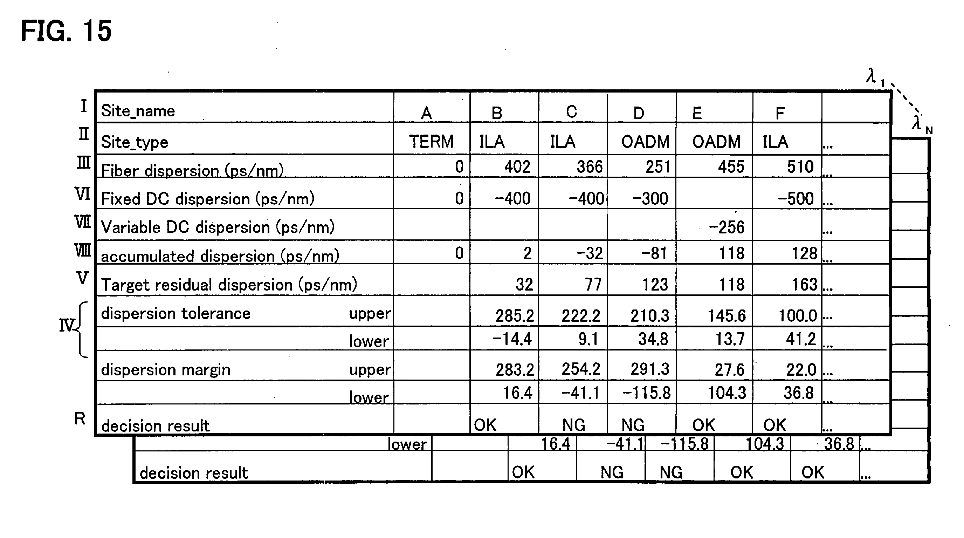

Fig. 15 shows a table for VDC arrangements, created in the process of execution of the method of the present invention. The tables are respectively created for each of the wavelengths λ1, λ2..., λn.

With the network topology, (I) site names (Site names) A, B, C, D, E, F,... are identified and, for each site, (II) apparatus type (Site type) is described in the table. In an example shown in Fig. 15, an example is shown for the case where a terminal (Term) is arranged at the site A, intermediate amplifiers (ILA) are arranged at the sites B, C and D and optical adding and dropping multiplexers (OADM) are arranged at the sites D and E. As shown in Fig. 6, arranging an optical adding and dropping multiplexer is necessary for each site at which an optical signal is dropped.

Next, selection of a wavelength dispersion compensator is ordered to the fixed wavelength dispersion compensator selection algorism 120 according to the design control sequence 100 (step S2).

Here, as shown in Fig. 7, the wavelength dispersion value property of a transmission path fiber used for each site differs depending on a condition that by which fiber manufacturer the fiber has beenmanufactured. Therefore, what dispersion property a fiber disposed in each site has is determined from the fiber dispersion database of Fig. 7 having been inputted in advance. The wavelength dispersion value (III) for each site obtained based on such a transmission path property for each fiber is set in the table shown in Fig. 15.

In the example shown in Fig. 15, as to λ1, the wavelength dispersion values (ps/nm) are set for the sites A, B, C, D and E respectively at zero (0), 402, 366, 251, 455 and 510. For example, the wavelength dispersion value "455" shown in a column for the site E is a dispersion value of a fiber between the sites D and E regarding the wavelength λ 1 and is a value obtained from customer data or a fiber database (see Fig. 7).

In Fig. 15, the column (IV) indicates the upper limit values (upper) and the lower limit values (lower) for each site. These upper limit values (upper) and the lower limit values (lower) are values obtained from the dispersion tolerance database already shown in Fig. 6. The upper limit values are dispersion tolerance upper limit values at the corresponding sites of a signal having a corresponding wavelength λ 1 that has been started to be transmitted from the site A. The lower limit values are dispersion tolerance lower limit values at the corresponding sites of a signal having a same corresponding wavelength λ1 that has been started to be transmitted from the site A.

Furthermore, a target residual dispersion value (V) is the optimal residual dispersion amount at a corresponding site of a signal that has been started to be transmitted from the site A, and this is also a value that can be obtained from the dispersion tolerance database.

Returning to Fig. 13, a fixed wavelength dispersion compensator having a value that cancels the wavelength dispersion value for each site, that has been set is selected according to the fixed wavelength dispersion compensator selection algorism 120. As described referring to Fig. 8, because the fixed wavelength dispersion compensators are prepared for every 100ps/nm, the fixed wavelength dispersion compensators respectively having a wavelength dispersion compensation value of -400, -400, -300 and -500 are selected for the sites B, C, D and F in an example shown in Fig. 12 (see Fig. 15, VI).

That is, the wavelength dispersion compensation amount (IV) indicates the dispersion of the fixed wavelength dispersion compensator arranged in a corresponding site and has been obtained from the database of Fig. 8 that shows the property at a corresponding wavelength of a compensator selected by the fixed wavelength dispersion compensator selection.

However, why the fixed wavelength dispersion compensator is not shown regarding the site E in Fig. 15 is because, as described later, the compensator is replaced by the compensation amount (Fig. 15, VII) for the wavelength multiplexed variable dispersion compensator.

The variable dispersion amount (VII) is determined by variable dispersion compensation amount determination and varies interlocked over the wavelengths λ1 to λ N.

Next, the designing sequence control 100 orders the dispersion property calculation algorism 140 to execute dispersion property calculation (step S3). Accumulated dispersion value (VIII) is obtained by the dispersion property calculation.

The accumulated dispersion value (VIII) is a total sum of the wavelength dispersion amount (III), the fixed wavelength dispersion amount (IV) and the accumulated dispersion value (VIII) for the previous site.

Furthermore, the designing sequence control 100 determines whether or not the accumulated dispersion value (VIII) is within the range between the upper limit values and the lower limit values of the dispersion tolerance (IV) and notifies the network designer through the GUI of the result of the dispersion property check (step S3A). However, for the accumulated dispersion value (VIII), various errors are assumed in a practical calculation process, the value (VIII) is obtained added with margins having positive and negative signs. The accumulated dispersion values (VIII) indicated in a table shown in Fig. 15 are values in a typical example.

Then, a selection order of the optical amplifier is ordered to the optical amplifier selection algorism 150 following the designing sequence control 100 (step S4). Furthermore, An order to determine whether or not the selection order can be transmitted by the selected amplifier is sent to the Q-value calculation algorism 160 (step S5).

In response to the above order, whether or not the transmission is possible based on the calculated Q-value is notified to the network designer through the GUI (step S5A).

In the detailed designing process (process step P6) as described above, when the notice of the result of the check on the dispersion property (step S3A) and the notice of the result of the check on transmission (step S5A) have been received, in the process flow of Fig. 10, if the transmission is possible (process step P7, Y), the designing is ended at this moment (process step P8).

If the transmission is not possible (process step P7, N) and if the dispersion property is OK (process step P9, Y), a function (3R) for converting into an electric signal and relaying the converted signal is necessary (process step P10).

If the dispersion property is not OK (process step P9, N) , aprocess for addingone (1) wavelength multiplexed variable dispersion compensator (VDC) is executed (process step P2E) and the process is returned to the starting point of the loop for the number Nvdc of the VDCs of process step P2S (Fig. 9).

Next, the case where the number of the VDCs Nvdc≧ one (1) is considered, In such a case, a plurality of VDC arrangement patterns exist depending on the number Nsite of the plurality of the sites. Therefore, returning to Fig. 11, combinations (_{Nsite}C_{Nvdc}) of all of the patterns to arrange Nvdc VDCs for the number Nsite of the plurality of the sites are extracted.

The characteristic of the present invention is to list all of the combination patterns of arrangement of these plurality of wavelength multiplexed variable dispersion compensators (VDC) in order of priority, in order to make the process more efficient.

That is, the following process is executed for VDC nodes of the arrangement pattern of each VDC (process step P33S to P33E).

A total value Z of "the compensation amounts of fixed wavelength dispersion compensators arranged in a design with Nvdc=0" already described referring to the flow of Fig. 13 is obtained (process step P34).

Next, dispersion σ of the distance between adjacent nodes at which VDCs are arranged is calculated (process step P35).

The process steps P34 and P35 are repeated respectively for all of the VDC arrangement patterns (process steps P33S to P33E).

Next, the arrangement patterns of VDCs are sorted relative to |Z| in ascending order. Furthermore, if the magnitude of |Z| is same, sorting is executed in alignment of the dispersion σ of the distance (process step P36).

For the arrangements sorted as above, the VDC arrangement patterns are terminated at a predetermined number M of the patterns (process step P37).

In the present invention, for the number M of patterns having high priority, targets of the detailed designing at the next process steps P4S to P4E are screened. Therefore, time necessary for designing can be reduced.

Following process step P37, being advanced to process steps P4S to P4E (Fig. 9 and Fig. 10), the process is basically same as in the case where Nvdc=0. However, in the detailed designing (process step P6), a process in the case where Nvdc≧1 (Fig. 14) becomes a target.

In the process in the case where Nvdc≧1 (Fig. 14), the process from step S1' to step S5A' are same as the process from steps S1 to S5A in the process in the case where Nvdc≧0 (Fig. 13).

For a different process, an order for variable dispersion compensation amount determination is sent to the variable dispersion compensation amount determination algorism 130 by the setting sequence control 100 in order to determine the dispersion compensation amount of the wavelength multiplexed variable dispersion compensators arranged according to the arrangement pattern of VDCs (step S6).

In response to this, an order of provisional dispersion property calculation is sent to the dispersion property calculation algorism 140 (step S7). The dispersion property calculation algorism 140 obtains the dispersion compensation amount and notifies the variable dispersion compensation amount determination algorism 130 of the dispersion compensation amount. Then, a dispersion correction amount is set in the wavelength multiplexed variable dispersion compensators arranged according to the arrangement pattern of VDCs (process step P7A).

For example, Fig. 15 shows an arrangement pattern for installing a wavelength multiplexed variable dispersion compensator at the site E and, in this case, "-256" is set as the dispersion correction amount for the wavelength multiplexed variable dispersion compensator (see Fig. 15, VI).

Here, an algorism of variable dispersion correction amount determination in the wavelength multiplexed variable dispersion compensator will be described.

The variable dispersion compensation amount is determined by applying a linear programming under the following conditions, regarding a table of Fig. 15.

As an objective function, a value is obtained that minimizes the root mean square (RMS) of the residual dispersion target (V) and the accumulated dispersion value (VIII) concerning all of the wavelengths and all of the paths.

However, as conditions, it is necessary for (a) R_{x-y}(λ) (dispersion determination result: decision result) to be possible to be transmitted (OK) for all x, y and λ that can be taken (however, x and y are sites at which OADMs, WXCs or TERMs are positioined) and (b) a dispersion compensation amount Vₓ (λ) of the wavelength multiplexed variable dispersion compensators to be within the range of the acceptable tolerance for all x and λ .

In this manner, in the flow of Fig. 9 and Fig. 10, regarding the detailed designing (process step P6), determination is executed as to whether or not transmission is possible (process step P7) and whether or not the dispersion property is OK (process step P9) during the process corresponding to an amount of Nvdc≧1 times.

When the conditions (a) and (b) that determine the above variable dispersion compensation amount are satisfied, the designing is completed (process step P8) in Fig. 10.

On the contrary, when the conditions (a) and (b) that determine the above variable dispersion compensation amount are not satisfied, no solution exists (process step P10) in Fig. 10. In this case, it is necessary to equip an apparatus having a 3R configuration, that converts the signal into an electric signal and reproduces and relays the converted electric signal.

As described above, the optimized arrangement of the wavelength multiplexed variable dispersion compensators to be arranged collectively for all of the wavelengths wavelength-multiplexed can be obtained by the method of designing a network of the present invention. During this, time necessary for designing process can be reduced by executing the process to find out the arrangement pattern for which transmission is possible and the dispersion property is within the acceptable range, by limiting to arrangement patterns for which the total value |Z| of the compensation amounts of the fixed wavelength dispersion compensators is large and to a predetermined number of arrangement patterns for which the dispersion σ of the distance between nodes on which adjacent wavelength multiplexed variable dispersion compensators are arranged is large.

Next, as described above, by the method of designing according to the present invention, nodes on which the wavelength multiplexed variable dispersion compensators (hereinafter referred to as "VDC nodes") and residual dispersion values after passing through each VDC node are determined. Therefore, it is necessary to set the condition value obtained for the designing, in an actual system.

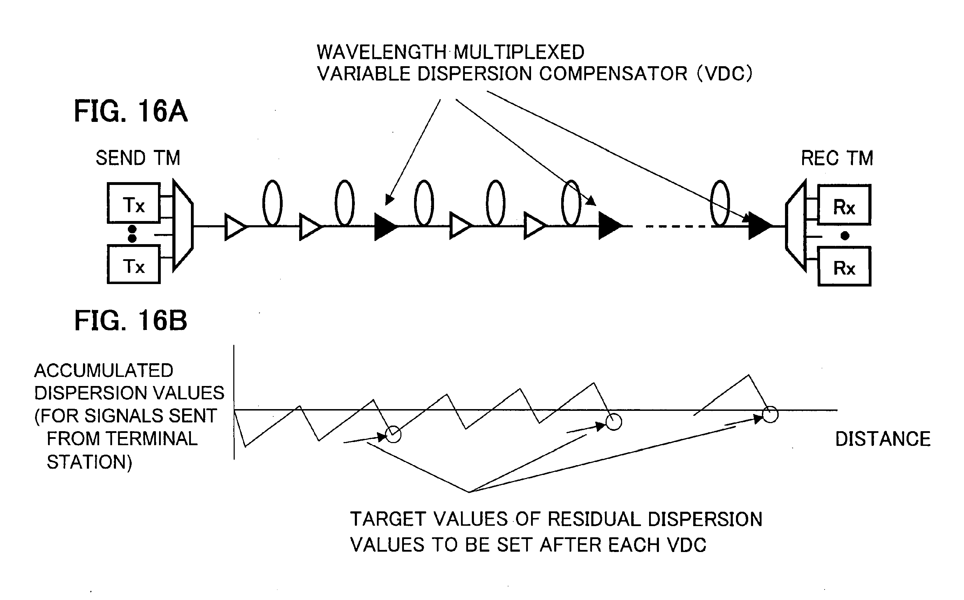

Fig. 16 shows the necessity of setting the condition values obtained for the designing, in an actual system.

It is a configuration for installing wavelength multiplexed variable dispersion compensators (VDC) at three (3) positions in a transmission path of a network connecting between a transmitting terminal station (SEND TM) and a receiving terminal station (REC TM) (Fig. 16A). Corresponding to this, accumulated dispersion values obtained at the time when respective wavelength multiplexed variable dispersion compensator (VDC) node has been passed through are provided.

Here, it is assumed that the accumulated dispersion values contain errors not according to the system design. Otherwise, the case where the setting amount of the wavelength multiplexed variable dispersion compensators (VDCs) prepared to be disposed is different from a designed value is assumed. In such a case, at the receiving terminal station, it is assumed that reception of a signal is difficult because the wavelength dispersion errors have been accumulated and gone out of the acceptable tolerance.

Therefore, the present invention further has a characteristic in the method of designing the dispersion compensation amount for the wavelength multiplexed variable dispersion compensators (VDCs) to avoid the disadvantage in the system designing.

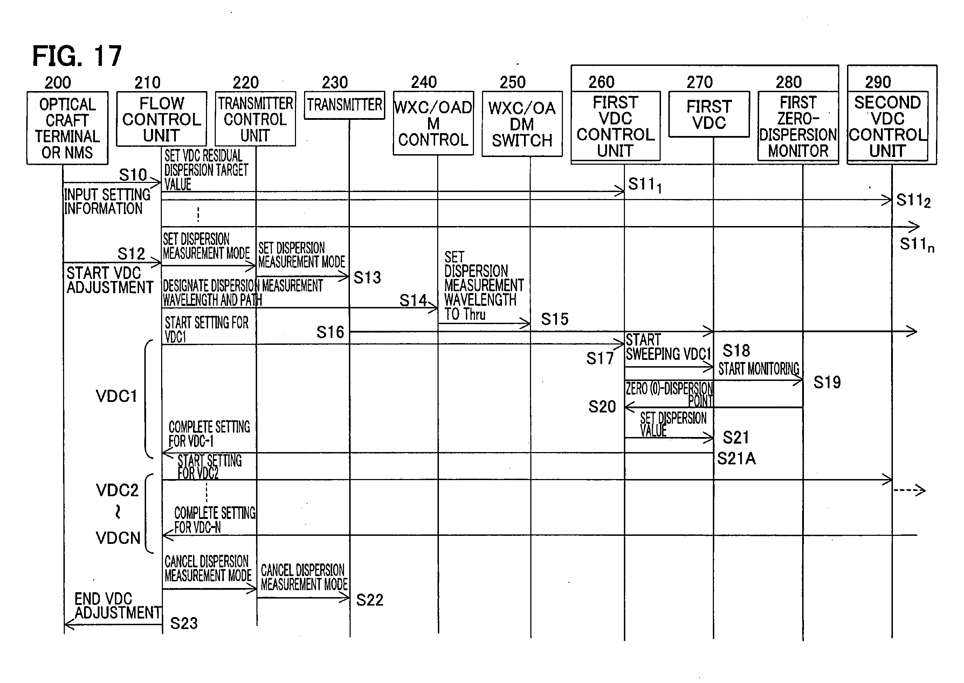

Fig. 17 shows a sequence indicating the procedure of a method of designing a system according to the present invention. In Fig. 17, design information (target values of residual dispersion after passing through each VDC) obtained by pre-designing from an optical craft terminal or a network management system (NMS) 200 is sent to a flow control unit 210.

The flow control unit 210 instructs to set the VDC residual dispersion target values to a VDC control unit of each of the wavelength multiplexed variable dispersion compensators (VDC) disposed (In fig. 17, a VDC control unit 260 of a first wavelength multiplexed variable dispersion compensators (VDC) and a second VDC control unit 290 of a second wavelength multiplexed variable dispersion compensators (VDC) located on the side closer to a transmitter 230 are shown) (step S11₁ and S11₂ to S11ₙ).

Next, the start of VDC adjustment is ordered from the optical craft terminal or the network management system (NMS) 200 to the flow control unit 210 (step S12). In response to this, the flow control unit 210 sets the transmitter 230 of the transmitting terminal station (SEND TM) into a dispersion measurement mode through a transmitter control unit 220 (step S13).

Simultaneously, the flow control unit 210, through a WXC/OADM control unit 240 (step S14), switches and sets a WXC/OADM switch 250 to pass only the channel of a measurement signal sent out from the transmitter 230 (step S15).

Thereby, the measurement signal sent out from the transmitter 230 can pass through all of the wavelength multiplexed variable dispersion compensators (VDC) disposed to the receiving terminal station (REC TM) (step S16).

After such preparation, the flow control unit 210 orders the start of setting for the wavelength multiplexed variable dispersion compensators (VDC) one after another beginning with the wavelength multiplexed variable dispersion compensator (VDC1) located closest to the transmitter 210 (step S17) and, when the setting of the dispersion value for the time when one (1) wavelength multiplexed variable dispersion compensator (VDC) has been passed through has been completed (step S21A), the process is advanced to the setting of the next wavelength multiplexed variable dispersion compensator (VDC).

Then, taking an example of the first wavelength multiplexed variable dispersion compensator (VDC) as one (1) wavelength multiplexed variable dispersion compensator (VDC), the VDC1 setting start order from the flow control unit 210 (step S17) is notified to the first VDC 270 through the first VDC control unit 260 (step S18) . The first VDC control unit 260 simultaneously orders a first zero (0) dispersion monitor 280 to start monitoring (step S19).

The first zero (0) dispersion monitor 280 notifies the first VDC control unit 260 of a detected zero (0) dispersion point (step S20). Thereby, the first VDC control unit 260 sets the dispersion value obtained by the pre-designing for a corresponding wavelength multiplexed variable dispersion compensator (VDC) (step S21). The completion of the setting is notified to the flow control unit 210 (step S21A).

When the setting of the dispersion value for one (1) wavelength multiplexed variable dispersion compensator (VDC) has been completed, setting of the dispersion values for other wavelength multiplexed variable dispersion compensators (VDC) is executed similarly one after another from a wavelength multiplexed variable dispersion compensators (VDC) located closest to the transmitter 230.

When the setting of the dispersion values for all of the wavelength multiplexed variable dispersion compensators (VDCs) has been completed, the dispersion measurement mode applied to the transmitter 220 is cancelled (step S22) and the VDC adjustment is ended (step S23).

Here, though various methods have been proposed as methods of setting the dispersion values for the wavelength multiplexed variable dispersion compensators (VDCs), all of them respectively need special mechanism and force increase of costs as a system. For example, as a conventional technique concerning the methods of setting the dispersion values for the wavelength multiplexed variable dispersion compensators (VDCs), the following can be listed.

According to an invention described in Japanese Patent Application Laid-Open Publication No. 2000-321171, dispersion is measured using wavelength modulation and a transmitter that sends a measurement signal needs a special mechanism in order to wavelength-modulate. Therefore, the configuration becomes complicated. Furthermore, the present invention especially needs a reference timing signal generating circuit on the receiving side.

According to an invention described in Japanese Patent Application La id-Open Publication No. 2000-346748, a dispersion measuring apparatus is prepared and dispersion is measured using an operating pilot tone. This invention needs a modulating circuit for the pilot tone, a pseudo random signal generating circuit and a correlater, resulting in complication. In addition, because two (2) transmission light sources having sufficiently separated wavelengths are needed to improve the precision, remarkable constraints are imposed on the form of operation.

According to an invention described in Japanese PatentApplication Laid-OpenPublication No. 2001-119344, a specific RF frequency component is minimized by adjusting variable dispersion compensators using alternating phase inverted pulses as a signal light beam.

Because a light modulator for alternating phase is needed, a transmitter is complicated and optical insertion loss of the modulator is increased, this invention has a disadvantage of also decreasing the transmission light power.

Furthermore, according to an invention described in Japanese Patent Application Laid-Open Publication No. 2001-211122, dispersion is measured during operation by taking the ratio of RF power of a signal waveform received to RF power of the frequency component of a portion of the received RF power. This invention needs a high-frequency power divider, two (2) power measuring devices, a comparator, etc.

According to an invention described in Japanese PatentApplication Laid-OpenPublication No.2001-339345, control is executed such that a specific frequency component of a received RF signal takes an extreme value during transmission of an optical signal in optical duo binary scheme. However, this invention needs a transmitter employing the optical duo binary scheme.

In addition, according to an invention described in Japanese Patent Application Laid-Open Publication No. 1999-068657, control is executed such that a bit rate component of an RF frequency becomes minimal during operation. Therefore, this invention needs means for modulating variable dispersion compensators at a low frequency.

As described above, as methods of measuring dispersion values for wavelength multiplexed variable dispersion compensators (VDC), in conventional examples, means that have complicated or special configuration are required. Therefore, considering the above point, the present invention provides means for finding zero (0) points of accumulated dispersion, having a small size and a simple configuration.

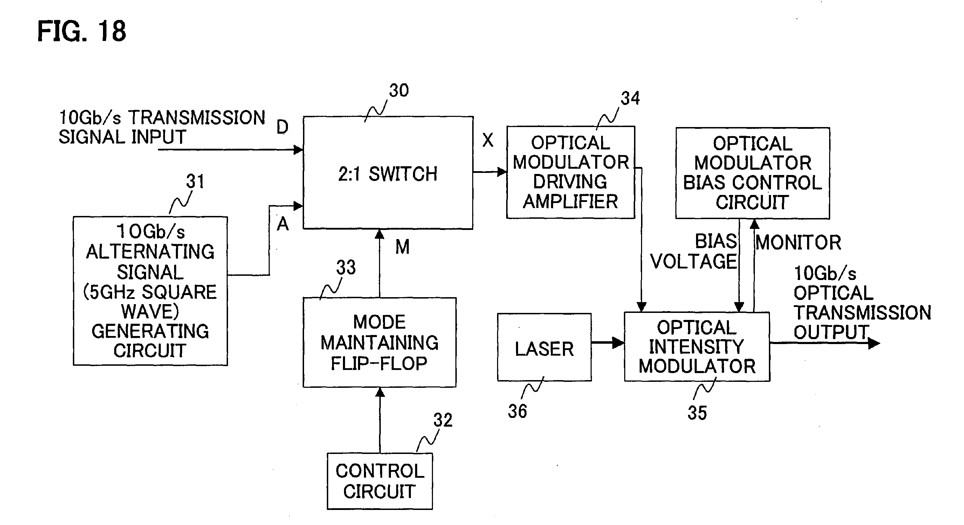

That is, Fig. 18 is a block diagram of an example of the configuration according to the present invention, that realizes a function of the transmitter 230 in the above system setting of Fig. 17.

A transmission signal of 10Gb/s is inputted into one (1) input of a switch 30 that has two (2) inputs and one (1) output and is controlled to switch as 2:1. An alternating signal of "1" and "0" of 10Gb/s is inputted into the other input as a signal for measurement by an NRZ square wave of 5GHz outputted from a measurement signal generating circuit 31.

A control circuit 32 controls a flip-flop 33 that maintains a measurement mode and a normal mode. Therefore, when the flip-flop 33 has been set to maintain the measurement mode by the control circuit 32, a measurement signal that is an output from the measurement signal generation circuit 31 is inputted into "A" input terminal of the 2:1 switch 30. On the contrary, when the flip-flop 33 has been set to maintain the normal mode by the control circuit 32, a transmission signal is inputted into D input terminal of the 2:1 switch 30.

Thereby, in the measurement mode, an alternating signal of "1" and "0" of 10Gb/s is outputted from the 2:1 switch 30 and is inputted into an optical-modulator-interlockedamplifier34. Anoptical intensity modulator 35 optically modulates illumination of a laser 36 in response to a driving signal of the optical-modulator-interlocked amplifier 34. Therefore, an optical signal of 5GHz from the optical intensity modulator 35 is outputted as the dispersion measurement signal and is transmitted from the transmitter 230 to the receiving terminal station (REC TM).

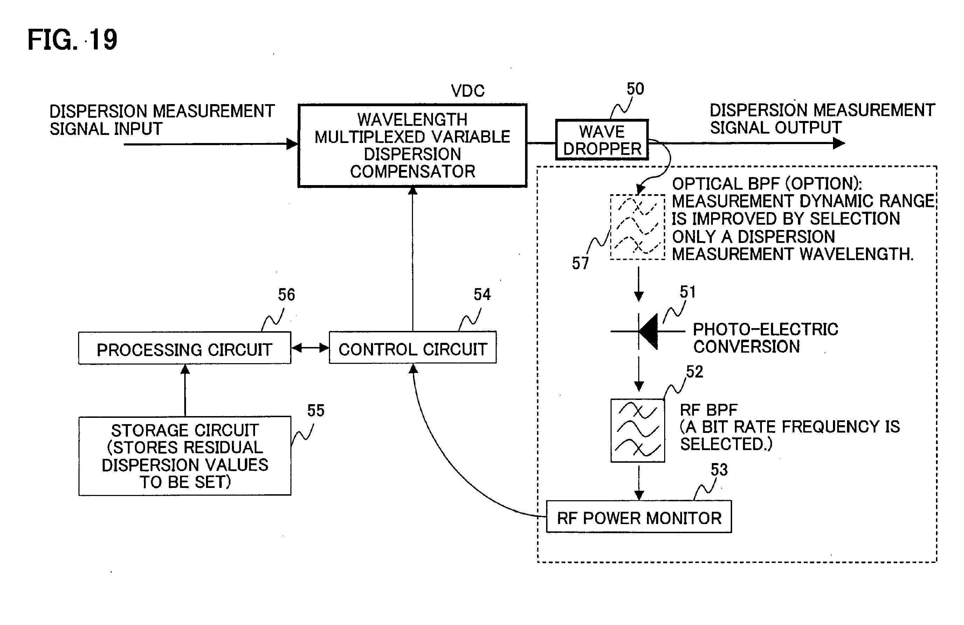

Fig. 19 is a block diagram of an example of the configuration of the zero (0) dispersion monitor 280 of the wavelength multiplexed variable dispersion compensator (VDC) to be arranged at a position pre-designed between the transmitter 230 and the receiving terminal station (REC TM).

The dispersion measurement signal sent from the transmitter 230 is inputted into the wavelength multiplexed variable dispersion compensators (VDC), dropped by a dropper 50 equipped on the output side of the wavelength multiplexed variable dispersion compensators (VDC) and converted into an electric signal by a photoelectric converter 51.

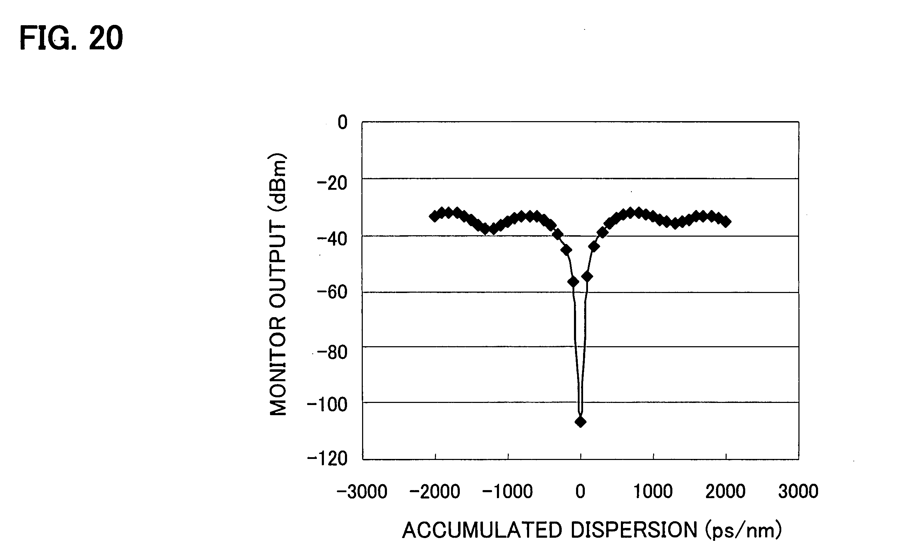

Abit rate frequency is selected by a band-pass filter 52 and a spectral intensity at the selected bit rate frequency is monitored by an RF power monitor 53. A control circuit 54 searches a compensation amount for which the output of the RF power monitor is minimized, by inputting an output of the RF power monitor 53 and sweeping the dispersion compensation amount of the wavelength multiplexed variable dispersion compensators (VDC). The output of the RF power monitor 53 at this time becomes as shown in Fig. 20 and residual dispersion becomes zero (0) with a compensation amount for which the output of the RF power monitor 53 is minimized.

In a storage circuit 55, a residual dispersion value obtained in the pre-designing to be set for a corresponding wavelength multiplexed variable dispersion compensator (VDC) is stored. Therefore, the residual dispersion value to be set, stored in the storage circuit 55 for the wavelength of a corresponding channel is added by a processing circuit 56 to the compensation amount for which the residual dispersion becomes zero (0) and the result of this addition is set by the control circuit 54 to the wavelength multiplexed variable dispersion compensator (VDC) as the final compensation amount.

In Fig. 19, the optical band-pass filter 57 is provided to improve a measurement dynamic range by selecting only a dispersion measurement signal wavelength, when necessary.

As described above, according to the present invention, means for finding a zero (0) point of accumulated dispersion having a small-sized and simple configuration can be provided by adding the minimal necessary logic circuit function (mode maintaining flip-flop 33, 2:1 switch, etc.) to the most common NRZ square wave output circuit as a transmission modulator at a transmission terminal station for making settings to wavelength multiplexed variable dispersion compensators (VDC). Especially, increase of costs of the system can be avoided by incorporating the NRZ square wave outputting circuit 31 into a transmission modulator.

As set forth hereinabove referring to the drawings, according to the present invention, the optimal arrangement of the wavelength multiplexed variable dispersion compensators and the setting value thereof can be determined, that guarantee the signal quality carry-over property of all paths and minimize the cost of equipment. Thereby, a transmission system of which equipment cost is low can be obtained and, therefore, the present invention will contribute greatly to the industry.

While illustrative and presently preferred embodiments of the present invention have been described in detail herein, it is to be understood that the inventive concepts may be otherwise variously embodied and employed and that the appended claims are intended to be construed to include such variations except insofar as limited by the prior art.

## Claims

1. A method of designing an optical transmission network employing a wavelength multiplexed transmission system, the method comprising the steps of:
inputting setting conditions of the optical transmission network;
obtaining arrangement patterns for installing wavelength multiplexed variable dispersion compensators in the optical transmission network based on the setting conditions;
if the obtained arrangement patterns for installing wavelength multiplexed variable dispersion compensators are plural, obtaining a total of fixed dispersion values obtained when a fixed dispersion compensator is arranged at a node at which the wavelength multiplexed variable dispersion compensator is positioned, for each of the obtained arrangement patterns;
sorting the arrangement patterns in order of priority relative to the magnitude of the absolute value of the obtained total of the fixed dispersion values; and
using the sorted arrangement patterns to a sorted arrangement pattern at a predetermined position in the order as targets for detailed designing for obtaining dispersion correction amount for the wavelength multiplexed variable dispersion compensators to be arranged.

2. A method of designing an optical transmission network according to claim 1, wherein
if the priority of the arrangement patterns to be sorted are same, dispersion values are obtained of the distances between arrangements of the wavelength multiplexed variable dispersion compensators to be positioned adjacent, and wherein
the sorting is executed in ascending order of the dispersion values of the distances between the obtained arrangements of the wavelength multiplexed variable dispersion compensator.

3. A method of designing an optical transmission network according to claim 1, wherein the setting conditions of the optical transmission network to be inputted include:
network topology showing how many and what type of sites are present on the network connecting between terminal stations and by what type of transmission path fibers spans between sites are connected;
transmission properties in the form of wavelength dispersion values of transmission path fibers connecting between sites; and
station conditions that are information indicating whether a terminal station or not, whether an optical adding and dropping multiplexer or not, or whether an optical amplifying and relaying apparatus (ILA), etc.

4. A method of designing an optical transmission network according to claim 1, wherein
a value is obtained that minimizes the root mean square (RMS) of a residual dispersion target and an accumulated dispersion value concerning all wavelengths and all paths as a dispersion correction amount in the detailed designing.

5. A method of designing an optical transmission network according to claim 1, wherein
if transmission is possible according to the detailed designing, detailed designing processes for arrangement patterns having smaller priority than the corresponding priority of the arrangement patterns are omitted.

6. A method of designing an optical transmission network according to claim 5, wherein
the arrangement patterns for arranging the wavelength multiplexed variable dispersion compensators in the optical transmission network based on the setting conditions are common to a plurality of wavelength multiplexed, and are determined by the detailed designing as to whether or not transmission is possible for all of the plurality of wavelengths multiplexed.

7. A method of designing an optical transmission network according to claim 1, wherein
the wavelength multiplexed variable dispersion compensators are disposed at nodes that drops wavelength signals in the transmission paths of the optical transmission network.

8. A method of designing an optical transmission network according to claim 1, wherein
whether or not transmission is possible is determined under a condition that no wavelength multiplexed variable dispersion compensator is arranged prior to the process for obtaining arrangement patterns for arranging the wavelength multiplexed variable dispersion compensators in the optical transmission network based on the setting conditions, and wherein
if the transmission is possible, processes after the process for obtaining the arrangement patterns for arranging the wavelength multiplexed variable dispersion compensator in the optical transmission network are omitted.

9. An optical transmission network employing a wavelength multiplexed transmission system by which a transmitting terminal station and a receiving terminal station are connected through a plurality of nodes, wherein
for wavelength multiplexed variable dispersion compensators to be arranged at any one of the plurality of nodes, based on setting conditions of the optical transmission network, arrangement patterns for arranging wavelength multiplexed variable dispersion compensators in the optical transmission network is obtained, wherein
if the obtained arrangement patterns for arranging the wavelength multiplexed variable dispersion compensators are plural, a total of fixed dispersion values obtained when a fixed dispersion compensator is arranged at a node at which the wavelength multiplexed variable dispersion compensator is placed is obtained for each of the obtained arrangement patterns, wherein
dispersion values of the distances between arrangements of the wavelength multiplexed variable dispersion compensators to be positioned adjacent are obtained, wherein
the arrangement patterns are sorted in order of priority relative to the magnitude of the absolute value of the obtained total of the fixed dispersion values, and wherein
dispersion correction amount obtained in detailed designing targeting the sorted arrangement patterns to a sorted arrangement pattern at a predetermined position in the order.

10. An optical transmission network according to claim 9, wherein
if the priority of the arrangement patterns to be sorted are same, the sorting is executed in ascending order of the dispersion values of the distances between the obtained arrangements of the wavelength multiplexed variable dispersion compensator.

11. An optical transmission network according to claim 9, wherein
the setting conditions of the optical transmission network includes:
network topology showing how many and what type of sites are present on the network connecting between terminal stations and by what type of transmission path fibers spans between sites are connected; and
a transmission property that is wavelength dispersion values of transmission path fibers connecting between sites; and
station conditions that are information indicating whether a terminal station or not, whether an optical adding and dropping multiplexer or not, or whether an optical amplifying and relaying apparatus (ILA), etc.

12. An optical transmission network according to claim 9, wherein
a value is obtained that minimizes the root mean square (RMS) of a residual dispersion target and an accumulated dispersion value concerning all wavelengths and all paths as a dispersion correction amount in the detailed designing.

13. A program for designing an optical transmission network employing a wavelength multiplexed transmission system, the program operable to drive a computer to execute the steps of:
inputting setting conditions of the optical transmission network;
obtaining arrangement patterns for installing wavelength multiplexed variable dispersion compensators in the optical transmission network based on the setting conditions;
if the obtained arrangement patterns for installing wavelength multiplexed variable dispersion compensators are plural, obtaining a total of fixed dispersion values obtained when a fixed dispersion compensator is arranged at a node at which the wavelength multiplexed variable dispersion compensator is positioned, for each of the obtained arrangement patterns;
sorting the arrangement patterns in order of priority relative to the magnitude of the absolute value of the obtained total of the fixed dispersion values; and
using the sorted arrangement patterns to a sorted arrangement pattern at a predetermined position in the order as targets for detailed designing for obtaining dispersion correction amount for the wavelength multiplexed variable dispersion compensators to be arranged.

14. A program for designing an optical transmission network according to claim 13, wherein
if the priority of the arrangement patterns to be sorted are same, dispersion values are obtained of the distances between arrangements of the wavelength multiplexed variable dispersion compensators to be positioned adjacent, and wherein
the sorting is executed in ascending order of the dispersion values of the distances between the obtained arrangements of the wavelength multiplexed variable dispersion compensator.

15. A program for designing an optical transmission network according to claim 13, wherein the setting conditions of the optical transmission network to be inputted include:
network topology showing how many and what type of sites are present on the network connecting between terminal stations and by what type of transmission path fibers spans between sites are connected;
transmission properties in the form of wavelength dispersion values of transmission path fibers connecting between sites; and
station conditions that are information indicating whether a terminal station or not, whether an optical adding and dropping multiplexer or not, or whether an optical amplifying and relaying apparatus (ILA), etc.

16. A program for designing an optical transmission network according to claim 13, wherein
a value is obtained that minimizes the root mean square (RMS) of a residual dispersion target and an accumulated dispersion value concerning all wavelengths and all paths as a dispersion correction amount in the detailed designing.

17. A method of starting up an optical transmission network employing a wavelength multiplexed transmission system by which a transmitting terminal station and a receiving terminal station are connected through a plurality of nodes, the method comprising the steps of:
sending a dispersion measurement signal having a predetermined frequency from the transmitting terminal station side to nodes at which wavelength multiplexed variable dispersion compensators are arranged among the plurality of nodes;
selecting only a bit rate frequency component of the dispersion measurement signal and measuring power of the signal on an output side of the wavelength multiplexed variable dispersion compensators;
adjusting dispersion amount of the wavelength multiplexed variable dispersion compensators such that the measured power is minimized; and
setting dispersion correction amount obtained using a method according to any one of claims 1 to 7 in the wavelength multiplexed variable dispersion compensators.

18. A node at which a wavelength multiplexed variable dispersion compensator is arranged among a plurality of nodes in a wavelength multiplexed transmission system by which a transmitting terminal station and a receiving terminal station are connected through the plurality of nodes, the node comprising:
a control circuit for setting a predetermined dispersion value in advance to the wavelength multiplexed variable dispersion compensators;
a filter for receiving a dispersion measurement signal sent from the transmitting terminal station through the wavelength multiplexed variable dispersion compensators and extracting only a bit rate frequency component of the received dispersion measurement signal; and
a power monitor for monitoring the spectral intensity at the bit rate frequency of an output of the filter,
wherein
the control circuit adjusts a dispersion amount of the wavelength multiplexed variable dispersion compensators such that the spectral intensity monitored by the power monitor is minimized.

19. A wavelength multiplexed transmission system by which a transmitting terminal station and a receiving terminal station are connected through a plurality of nodes, wherein
the transmitting terminal station comprises:
a switch of which one (1) output of two (2) inputs is controlled to be switched;
a measurement signal generating circuit for generating an NRZ square wave signal having a predetermined frequency and outputting an alternating signal of "1" and "0" having a half the predetermined frequency as a measurement signal;
a mode maintaining circuit for maintaining a measurement mode and a normal mode;
control being provided such that the measurement signal generating circuit outputs a transmission signal having a same frequency as that of the measurement signal when the switch has switched to the normal mode and that the measurement signal generating circuit outputs the measurement signal when the switch has switched to the measurement mode,
a driving amplifier for inputting the measurement signal outputted from the switch to generate a drive signal;
a modulator for optical-intensity-modulating light emitted from a laser by the output of the driving amplifier; and
a circuit for sending out an output of the modulator as a measurement signal, wherein
a node at which a wavelength multiplexed variable dispersion compensator is arranged among the plurality of nodes includes:
a control circuit for setting a predetermined dispersion value in advance to the wavelength multiplexed variable dispersion compensators;
a filter for receiving a dispersion measurement signal sent from the transmitting terminal station through the wavelength multiplexed variable dispersion compensators and extracting only a bit rate frequency component of the received dispersion measurement signal; and
a power monitor for monitoring the spectral intensity at the bit rate frequency of an output of the filter, wherein
the control circuit adjusts a dispersion amount of the wavelength multiplexed variable dispersion compensators such that the spectral intensity monitored by the power monitor is minimized.
